# EUROPÄISCHE PATENTSCHRIFT

(11) **EP 2 977 093 B1**
(45) Veröffentlichungstag und Bekanntmachung des Hinweises auf die Patenterteilung: **05.05.2021**
(21) Anmeldenummer: 14178611.1
(22) Anmeldetag: 25.07.2014
(51) Int. Cl.: B01D 53/04, A62B 11/00

(54) **Verfahren zu einer Abtrennung von Kohlendioxid aus Atemluft eines U-Boots**
Method for separating carbon dioxide from breathing air of a submarine
Procédé destiné à séparer du dioxyde de carbone d'air respiratoire d'un sous-marin

(43) Veröffentlichungstag der Anmeldung: 27.01.2016
(73) Patentinhaber: Airbus Defence and Space GmbH, 82024 Taufkirchen (DE)
(72) Erfinder: Matthias, Carsten, 88046 Friedrichshafen (DE); Jehle, Walter, 88263 Horgenzell (DE); Kern, Peter, 88682 Salem (DE)
(74) Vertreter: Daub, Thomas

(56) Entgegenhaltungen:
- EP-A1- 0 068 525
- DE-U1-202008 016 034
- JP-A- H02 187 153
- US-A- 3 469 934
- US-A- 5 968 234
- US-A- 5 972 077
- US-A1- 2010 263 534
- US-B1- 8 128 735

## Beschreibung

### Stand der Technik

Aus der EP 2 397 212 A1 ist bereits ein Verfahren zu einer Abtrennung von Kohlendioxid aus einem Gasgemisch bekannt. Hierbei wird thermische Energie, die zu einer Regeneration eines Adsorbers oder Absorbers genutzt wird, durch Verbrennung eines kohlenwasserstoffhaltigen Energieträgers mit Sauerstoff erzeugt.

Aus der US 3469934 A ist bereits ein Verfahren zu einer Abtrennung von Kohlendioxid aus Atemluft mit einer Lebenserhaltungsvorrichtung bekannt, bei dem in einem ersten Verfahrensschritt das Gasgemisch bei zumindest einem ersten Druck einer Absorptionseinheit zugeführt wird und in einem zweiten Verfahrensschritt ein Gasgemisch bei einem zweiten, gegenüber dem ersten höheren Druck aus der Absorptionseinheit abgeführt wird.

Aus der US 2010/0263534 A1 ist ebenfalls ein Verfahren zu einer Abtrennung von Kohlendioxid aus Luft bereits bekannt.

Die Aufgabe der Erfindung besteht insbesondere darin, ein Verfahren zur Abtrennung von Kohlendioxid aus einem Gasgemisch welches aus Atemluft besteht, mit einer Lebenserhaltungsvorrichtung in einem U-Boot, bei einem hohen Druck während einer Regeneration eines Adsorbers oder Absorbers mit einem hohen Wirkungsgrad und verbesserter Geräuschsignatur des U-Boots bereitzustellen. Die Aufgabe wird erfindungsgemäß durch die Merkmale des Patentanspruchs 1 gelöst, während vorteilhafte Ausgestaltungen und Weiterbildungen der Erfindung Unteransprüchen und einem Nebenanspruch entnommen werden können.

### Vorteile der Erfindung

Es wird ein Verfahren zu einer Abtrennung von Kohlendioxid aus einem Gasgemisch, welches aus Atemluft besteht, einer Lebenserhaltungsvorrichtung einem U-Boot, vorgeschlagen, bei dem in einem ersten Verfahrensschritt das Gasgemisch bei zumindest einem ersten Druck einer Adsorptions- und/oder Absorptionseinheit zugeführt wird und in einem zweiten Verfahrensschritt ein Gasgemisch bei zumindest einem zweiten, gegenüber dem ersten Druck höheren Druck aus der Adsorptions- und/oder Absorptionseinheit abgeführt wird. Mit den Begriffen "erster Verfahrensschritt" und "zweiter Verfahrensschritt" soll insbesondere nicht ausgeschlossen werden, dass auch noch weitere Verfahrensschritte zwischen dem sogenannten ersten Verfahrensschritt und dem sogenannten zweiten Verfahrensschritt durchgeführt werden könnten. Unter einem "geschlossenen Habitat" soll ein Lebensraum verstanden werden, in den von dessen Umgebung zumindest in einzelnen Betriebszuständen, insbesondere keine Luft zugeführt werden kann, wie dies insbesondere bei Habitaten von Unterwasserbooten oder auch bei Weltraumhabitaten der Fall ist.

Durch die vorgeschlagene Druckänderung, was auch als Druckwechselverfahren bezeichnet werden kann, kann ein besonders hoher Wirkungsgrad bzw. ein besonders effizientes Verfahren erzielt werden, und zwar insbesondere, wenn das Gasgemisch im ersten Verfahrensschritt zumindest im Wesentlichen unter einem Umgebungsdruck der Adsorptions- und/oder Absorptionseinheit zugeführt wird, welcher wiederum insbesondere vorzugsweise zumindest im Wesentlichen einem Kabinendruck des Habitats und damit U-Boots oder einer Weltraumkabine (nicht von der Erfindung umfasst) entspricht. Unter einem Kabinendruck soll dabei insbesondere ein Druck in einer Kabine verstanden werden, in welchem sich Personen im U-Boot oder in der Weltraumkabine grundsätzlich ohne Atemunterstützung und ohne Druckanzüge aufhalten können. Vorzugsweise entspricht der Umgebungsdruck der Adsorptions- und/oder Absorptionseinheit zumindest im Wesentlichen einem absoluten Druck von 101,325 kPa_{abs.}. Unter "zumindest im Wesentlichen" soll dabei eine Abweichung kleiner als 30% vorteilhaft kleiner als 20% und besonders bevorzugt kleiner als 10% verstanden werden. Der zweite Druck ist vorzugsweise mindestens zweimal größer, besonders bevorzugt mindestens viermal größer als der erste Druck. Erfindungsgemäß ist der zweite Druck größer als abs., 5 bar_{abs.} und ganz bevorzugt größer als 10 barabs.

Durch die erfindungsgemäße Ausgestaltung kann ein besonders energetisch günstiger Prozess erreicht werden, da eine Druckerhöhung zumindest teilweise, vorzugsweise zum Großteil oder ganz bevorzugt sogar vollständig in einer Flüssigphase (hohe Drücke werden mittels Wasser und Einsatz einer Hochdruckpumpe realisiert) erfolgen kann. Es kann eine einfache Steuerung der Prozesse, insbesondere mittels Absolutdrucksensoren und mit niedrigen Luftverlusten erreicht werden. Es kann eine geringe Kohlendioxidrückführung während einer Luftrückführung durch eine vorteilhafte Gastrennung erreicht werden. Es sind kostengünstige Adsorptions- und/oder Absorptionseinheit mit einfachen Geometrien und wenigen Komponenten einsetzbar. Es kann erreicht werden, dass abgetrenntes nasses Kohlendioxid bei erhöhtem Druck und niedrigen Temperaturen vorliegt, wodurch das Kohlendioxid sehr effektiv getrocknet werden kann, bevor es z.B. einem Kompressor zur Nachverdichtung zugeführt wird. Zudem können Kompressorstufen und damit Baukosten, Bauraum und Gewicht eingespart werden, indem ein bereits vorverdichtetes Kohlendioxid erreicht werden kann. Während einer U-Bootmission bei niedriger Tauchtiefe kann eine Geräuschsignatur des U-Boots verbessert werden, und zwar indem ein Kompressoreinsatz zur Verdichtung von Kohlendioxid vermeidbar ist.

Erfindungsgemäß wird dabei als Adsorptions- und/oder Absorptionseinheit wenigstens ein Druckbehälter verwendet, d.h. die Adsorptions- und/oder Absorptionseinheit, die verwendet wird, umfasst zumindest einen Druckbehälter, wodurch vorteilhaft innerhalb desselben ein Überdruck aufgebaut werden kann. Unter einem "Druckbehälter" soll dabei ein Behälter verstanden werden, der gezielt dazu vorgesehen und insbesondere auch dazu ausgelegt ist, dass innerhalb des Druckbehälters ein Überdruck, erfindungsgemäß ein Druck größer als 5 bar_{abs} und besonders vorzugsweise größer als 10 bar_{abs.}, aufgebaut werden kann und der Behälter diesem Innendruck stand hält.

Erfindungsgemäß wird vorgeschlagen, dass zu einer Druckerhöhung innerhalb der Adsorptions- und/oder Absorptionseinheit die Adsorptions- und/oder Absorptionseinheit erwärmt wird. Durch eine Erwärmung kann effektiv eine Druckerhöhung erreicht werden und insbesondere auch eine Begünstigung einer Desorption des Kohlendioxids. Erfindungsgemäß wird vorgeschlagen, dass zumindest eine Adsorptions- und/oder Absorptionseinheit mit Heißdampf erwärmt wird. Hier kann vorzugsweise eine Heißdampfquelle eines U-Boots genutzt werden und/oder es kann zur Erzeugung von Heißdampf eine Pumpe und ein Verdampfer genutzt werden.

Ferner wird vorgeschlagen, dass zumindest eine Adsorptions- und/oder Absorptionseinheit elektrisch erwärmt wird, wodurch gezielt gewünschte Temperaturen einfach eingestellt werden können. Besonders vorteilhaft kann auch eine elektrische Erwärmung mit einer anderen Erwärmung kombiniert werden, wie vorteilhaft mit einer Erwärmung mittels Heißdampf und/oder einer Erwärmung mittels eines Wärmeträgerfluids, welches das Adsorptions- und/oder Absorptionsbehältnis erwärmt, indem dieses im Prinzip eines Wärmetauschers an Wänden des Adsorptions- und/oder Absorptionsbehältnis vorbei geführt wird.

Erfindungsgemäß wird vorgeschlagen, dass zu einer Druckerhöhung innerhalb der Adsorptions- und/oder Absorptionseinheit ein Fluid in die Adsorptions- und/oder Absorptionseinheit eingeführt wird, und zwar vorzugsweise in einen Innenraum des Druckbehälters der Adsorptions- und/oder Absorptionseinheit, in dem auch das Adsorptions- und/oder Absorptionsmaterial angeordnet ist. Dadurch können insbesondere vorteilhaft hohe Drücke innerhalb der Adsorptions- und/oder Absorptionseinheit erreicht werden. Dabei sind verschiedene, dem Fachmann als sinnvoll erscheinende Fluide denkbar. Besonders vorteilhaft wird der Adsorptions- und/oder Absorptionseinheit jedoch Heißdampf, heißes Wasser und/oder Kohlendioxid zugeführt.

Erfindungsgemäß wird im ersten Verfahrensschritt das Gasgemisch bei zumindest einer ersten Temperatur der Adsorptions- und/oder Absorptionseinheit zugeführt und in dem zweiten Verfahrensschritt wird das abzuführende Gasgemisch bei zumindest einer zweiten, gegenüber der ersten Temperatur höheren Temperatur aus der Adsorptions- und/oder Absorptionseinheit abgeführt. Vorzugsweise liegt die erste Temperatur zwischen 5°C und 50°C, besonders bevorzugt zwischen 10°C und 40°C und ganz besonders bevorzugt zwischen 15°C und 30°C. Die zweite Temperatur ist vorzugsweise größer als 70°C, besonders bevorzugt größer als 80°C und ganz besonders bevorzugt größer als 90°C.

Wird ein Gas, insbesondere Kohlendioxid für eine Aufkonzentration in der Adsorptions- und/oder Absorptionseinheit, insbesondere des Adsorptions- und/oder Absorptionsmaterials, zu der Adsorptions- und/oder Absorptionseinheit rückgeführt, können vorteilhaft hohe Drücke erzielt werden und insbesondere kann Kohlendioxid bei hohen Drücken aus der Adsorptions- und/oder Absorptionseinheit abgeführt werden. Unter einem "Gas" soll in diesem Zusammenhang ein Gasgemisch oder auch ein reines Gas verstanden werden. Besonders vorteilhaft kann auch eine mehrstufige Aufkonzentration durchgeführt werden, wodurch der Druck weiter gesteigert werden kann. Hierbei wird Kohlendioxid zumindest zweistufig rückgeführt, d.h. in einer ersten Stufe von einer ersten Adsorptions- und/oder Absorptionseinheit zu einer zweiten Adsorptions- und/oder Absorptionseinheit und in zumindest einer zweiten Stufe von der zweiten Adsorptions- und/oder Absorptionseinheit zu einer dritten Adsorptions- und/oder Absorptionseinheit.

Erfindungsgemäß wird Kohlendioxid ohne Nachverdichtung und Einsatz eines Kompressors aus zumindest einer Adsorptions- und/oder Absorptionseinheit direkt abgeführt, direkt aus einem U-Boot, dadurch kann der Wirkungsgrad weiter gesteigert werden. Dies kann insbesondere bei geringen Tauchtiefen des U-Boots realisiert werden.

Ferner wird vorgeschlagen, dass in wenigstens einer Adsorptions- und/oder Absorptionseinheit wenigstens ein Volumenkompensator eingesetzt wird, der dazu vorgesehen ist, eine Kompaktierung eines Adsorptions- und/oder Absorptionsmaterials der Adsorptions- und/oder Absorptionseinheit sicher zu stellen. Es kann eine Quellung des Adsorptions- und/oder Absorptionsmaterials ermöglicht und dennoch eine Kompaktierung sowie Formstabilität des Adsorptions- und/oder des Absorptionsmaterials, insbesondere eines Absorberharzes und/oder eines Adsorberharzes, sichergestellt werden, und zwar insbesondere unter einer Wasserdampfatmosphäre. Der Volumenkompensator kann dabei verschiedene, dem Fachmann als sinnvoll erscheinenden Elemente umfassen, wie beispielsweise ein komprimierbares Gasvolumen, elastisch verformbare Federelemente, Rückhalteelemente usw. Besonders vorteilhaft weist der Volumenkompensator jedoch zumindest ein mechanisches Federelement auf. Dabei soll unter einem "mechanischen Federelement" insbesondere eine Feder mit einem elastischen, nicht gasförmigen Material verstanden werden. Grundsätzlich sind verschiedene, dem Fachmann als sinnvoll erscheinende Federn denkbar, wie Zugfedern usw., besonders bevorzugt wird jedoch eine Druckfeder, und zwar insbesondere eine Schraubendruckfeder, vorzugsweise eine Metallschraubendruckfeder, verwendet. Vorzugsweise kann der Volumenkompensator zumindest einen Faltenbalg aufweisen, um eine vorteilhaft beweglich gelagerte Begrenzungswand für das Adsorptions- und/oder Absorptionsmaterial zu ermöglichen. Ferner umfasst der Volumenkompensator zumindest eine Lochplatte, insbesondere ein Lochblech, und/oder ein Metallgewebe, die vorzugsweise als Begrenzungswand für das Adsorptions- und/oder Absorptionsmaterial dient. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung der Erfindung wird vorgeschlagen, dass das Gasgemisch in einer ersten Hauptströmungsrichtung in die Adsorptions- und/oder Absorptionseinheit eingeführt und in einer von der ersten Hauptströmungsrichtung wesentlich abweichenden zweiten Hauptströmungsrichtung durch ein in der Adsorptions- und/oder Absorptionseinheit angeordnetes Adsorptions- und/oder Absorptionsmaterial geführt wird, wodurch vorteilhaft geringe Druckverluste sichergestellt werden können. Vorzugsweise weist hierfür die Adsorptions- und/oder Absorptionseinheit wenigstens ein Strömungsumlenkelement auf, das dazu vorgesehen ist, das in die erste Richtung eingeführte Gasgemisch in eine von der ersten Hauptströmungsrichtung wesentlich abweichende zweite Hauptströmungsrichtung durch das in der Adsorptions- und/oder Absorptionseinheit angeordnete Adsorptions- und/oder Absorptionsmaterial umzulenken. Unter einer von der ersten Hauptströmungsrichtung wesentlich abweichenden zweiten Hauptströmungsrichtung soll insbesondere verstanden werden, dass die Hauptströmungsrichtungen einen Winkel größer als 30° und vorzugsweise größer als 45° und besonders bevorzugt zumindest im Wesentlichen einen Winkel von 90° einschließen. Unter einer "Hauptströmungsrichtung" soll in diesem Zusammenhang insbesondere eine Richtung einer Nettoströmung und insbesondere eine Richtung eines mittleren Massetransports in einer Strömung verstanden werden.

Ferner kann Energie eingespart und damit der Wirkungsgrad erhöht werden, indem Wärmeenergie von einer Adsorptions- und/oder Absorptionseinheit zu zumindest einer weiteren Adsorptions- und/oder Absorptionseinheit übertragen wird und/oder indem Druckenergie von einer Adsorptions- und/oder Absorptionseinheit zu zumindest einer weiteren Adsorptions- und/oder Absorptionseinheit übertragen wird. Hierbei werden vorzugsweise mehrere Adsorptions- und/oder Absorptionseinheiten, insbesondere Adsorptionsrohre und/oder Absorptionsrohre, zu einer Anlage miteinander verschaltet. Einzelne Adsorptions- und/oder Absorptionseinheiten durchlaufen zweitversetzt, vorzugsweise im ständigen Wechsel, zunächst eine Adsorptions- und/oder Absorptionsphase und im Anschluss eine Regenerationsphase, wodurch eine Druckwechselintegration und zumindest partielle Wärmeintegration in der Anlage ermöglicht werden kann.

Grundsätzlich sind verschiedene, dem Fachmann als sinnvoll erscheinende Adsorber- und/oder Absorbermaterialien denkbar, wie insbesondere flüssige oder gasförmige Adsorber- und/oder Absorbermaterialien. Besonders vorteilhaft wird jedoch zumindest ein Festkörperadsorber und/oder ein Festkörperabsorber genutzt, und zwar ganz besonders bevorzugt ein Absorber- und/oder Adsorberharz. Besonders eignet sich ein Amin, und zwar bevorzugt ein Festamin. Das Absorptions- und/oder Adsorptionsmaterial weist vorzugsweise eine Selektivität bei Standardbedingungen, d.h. bei einer Temperatur von 25°C und einem Druck von 1 bar_{abs.}, größer als 100, besonders bevorzugt größer als 150 und ganz bevorzugt größer als 200 auf. Unter einer "Selektivität" soll dabei ein Beladungsverhältnis verstanden werden, insbesondere ein Beladungsverhältnis zwischen CO₂ und Luft. Das Absorptions- und/oder Adsorptionsmaterial wird vorzugsweise in Form einer Schüttung verwendet. Unter einer "Schüttung" soll in diesem Zusammenhang insbesondere verstanden werden, dass das Material in einem körnigen und/oder auch stückigen Gemenge, insbesondere in einer schüttfähigen Form vorliegt. Mit einem Festamin können vorteilhaft niedrige Regenerationstemperaturen erreicht werden. Ferner kann eine hohe Lebensdauer erzielt werden. Alternativ zu einem Amin sind jedoch auch grundsätzlich Molekularsiebe, beispielsweise aus Aktivkohle usw., denkbar.

Zusätzlich wird vorgeschlagen, dass ein Wärmeträgerfluid zur Erwärmung zumindest einer Adsorptions- und/oder Absorptionseinheit in einem Wärmekreislauf gepumpt wird. Das Wärmeträgerfluid wird dabei vorteilhaft außen um Adsorptions- und/oder Absorptionselemente, vorzugsweise außen an Adsorptions- und/oder Absorptionsrohre, geleitet und im Wärmekreislauf gepumpt. Dabei können vorteilhaft mehrere Adsorptions- und/oder Absorptionsrohre in einem Rohrbündelwärmetauscher integriert werden, in dem das Wärmeträgerfluid einen Mantelraum der Adsorptions- und/oder Absorptionsrohre durchströmt bzw. Mäntel der Adsorptions- und/oder Absorptionsrohre umströmt. Durch eine entsprechende Ausgestaltung kann der Wirkungsgrad weiter optimiert werden. Ferner wird vorgeschlagen, dass eine Luftrückgewinnung aus zumindest einer Adsorptions- und/oder Absorptionseinheit mittels wenigstens einer Vakuumpumpe durchgeführt wird, und zwar vorzugsweise zu Beginn einer Regenerationsphase, wodurch eine sehr einfache Luftrückgewinnung und niedrige Luftverluste erreicht werden können. Ferner kann eine entsprechende Luftrückgewinnung mittels einer Vakuumpumpe einfach mess- und regelungstechnisch eingestellt werden.

In einer weiteren Ausgestaltung die nicht der Erfindung entspricht, wird vorgeschlagen, dass vorverdichtetes Kohlendioxid nach einem Abführen aus zumindest einer Adsorptions- und/oder Absorptionseinheit getrocknet und anschließend nachverdichtet wird. Vorzugsweise wird dabei ein kondensierender Wärmetauscher eingesetzt, d.h. ein Wärmetauscher, bei dem insbesondere durch Kondensation Wärme an die Umgebung abgeführt wird. Durch die Gastrocknung im Wärmetauscher bei erhöhtem Druck kann vorteilhaft eine geringe Restwassermenge im Gas vor der anschließenden Nachverdichtung in einem Kompressor erreicht werden. Dadurch können insbesondere kostengünstigere Kompressoren mit höherer Lebensdauer eingesetzt werden. Das Trocknen findet vorzugsweise bei einem erhöhten Druck, vorzugsweise bei einem Druck größer als 4 bar_{abs.}, statt.

Ferner wird vorgeschlagen, dass das Kohlendioxid mittels wenigstens eines Druckwasserwäschers in einer Flüssigkeit, insbesondere Wasser, gelöst wird, wodurch ein Kompressoreinsatz vermieden und damit Energie eingespart werden kann.

Ferner kann Energie eingespart werden, wenn ein Restgasdruck, insbesondere am Ende einer Regeneration, in zumindest einer Adsorptions- und/oder Absorptionseinheit in wenigstens einem Verfahrensschritt in einen Flüssigkeitstank, insbesondere in einen Wassertank, abgelassen wird. Die Flüssigkeit im Flüssigkeitstank kann vorteilhaft vorgewärmt werden, wodurch eine vorteilhafte Wärmeintegration erzielbar ist. Kohlendioxid kann dann dabei vorteilhaft in der Flüssigkeit, insbesondere in Wasser, gelöst werden. Die Flüssigkeit kann anschließend vorteilhaft in folgenden Regenerationen als Feedwasser für einen Verdampfer verwendet werden. Bei einer Verdampfung der Flüssigkeit wird das in der Flüssigkeit gelöste Kohlendioxid wieder freigesetzt, womit in die Adsorptions- und/oder Absorptionseinheit ein Kohlendioxid/Dampf Gemisch eingeleitet wird, wodurch ein vorteilhaft hoher Druck in der Adsorptions- und/oder Absorptionseinheit erreichbar ist.

Ferner wird eine Vorrichtung zu einer Durchführung eines erfindungsgemäßen Verfahrens mit wenigstens einer ersten Adsorptions- und/oder Absorptionseinheit vorgeschlagen.

Die Adsorptions- und/oder Absorptionseinheit umfasst zumindest einen Druckbehälter, in welchem Adsorptions- und/oder Absorptionsmaterial der Adsorptions- und/oder Absorptionseinheit angeordnet ist, wodurch vorteilhaft in der Adsorptions- und/oder Absorptionseinheit ein vorteilhafter Überdruck aufgebaut werden kann. Ein Energieaufwand für eine Verdichtung nach der Adsorptions- und/oder Absorptionseinheit kann zumindest reduziert oder sogar vollständig vermieden werden. Der Druckbehälter, kann dabei von verschiedenen, dem Fachmann als sinnvoll erscheinenden Bauteilen gebildet sein, wie von eckigen Druckbehältern, runden Druckbehältern usw. Besonders vorteilhaft ist der Druckbehälter jedoch zumindest teilweise von einem Rohr gebildet, und zwar vorzugsweise zumindest teilweise von einem zylindrischen Druckrohr.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt einer erfindungsgemäßen Vorrichtung mit einem schematisch dargestellten Absorptionsrohr,
- Fig. 2: eine schematische Darstellung der erfindungsgemäßen Vorrichtung mit einem Kohlendioxid-Kompressor,
- Fig. 3: eine schematische Darstellung einer alternativen erfindungsgemäßen Vorrichtung mit einer Druckwasserwäscher,
- Fig. 4: eine schematische Darstellung einer alternativen erfindungsgemäßen Vorrichtung mit einer Heißdampfquelle,
- Fig. 5: eine schematische Darstellung einer alternativen erfindungsgemäßen Vorrichtung ohne Dampfeinsatz,
- Fig. 6: einen schematisch dargestellten Prozessablauf mit einzelnen Verfahrensschritten während eines Betriebszyklus und
- Fig. 7: einen Ausschnitt einer erfindungsgemäßen Vorrichtung mit einem schematisch dargestellten alternativen Absorptionsrohr.

### Beschreibung der Ausführungsbeispiele

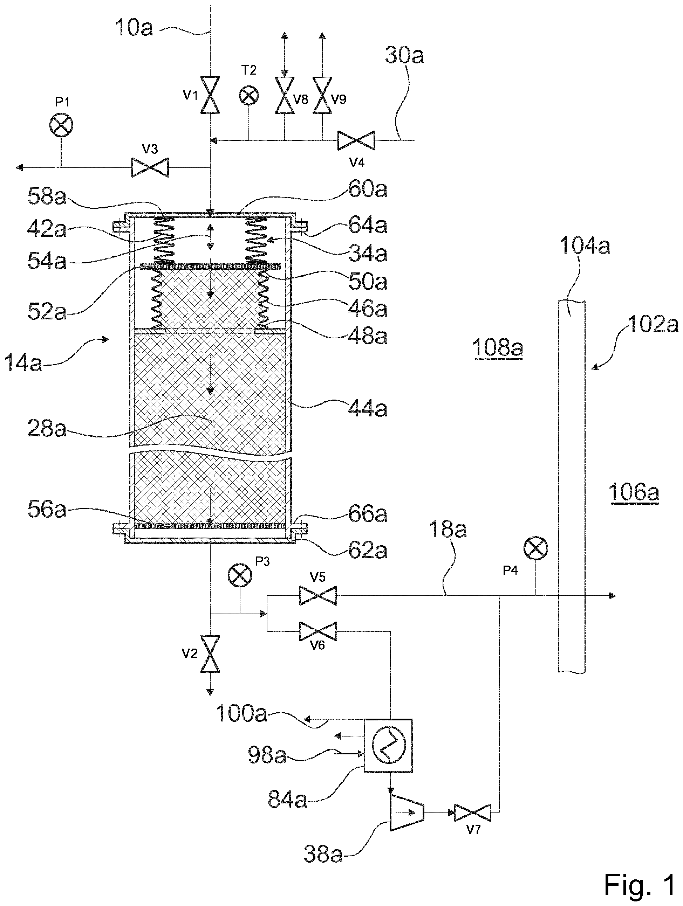

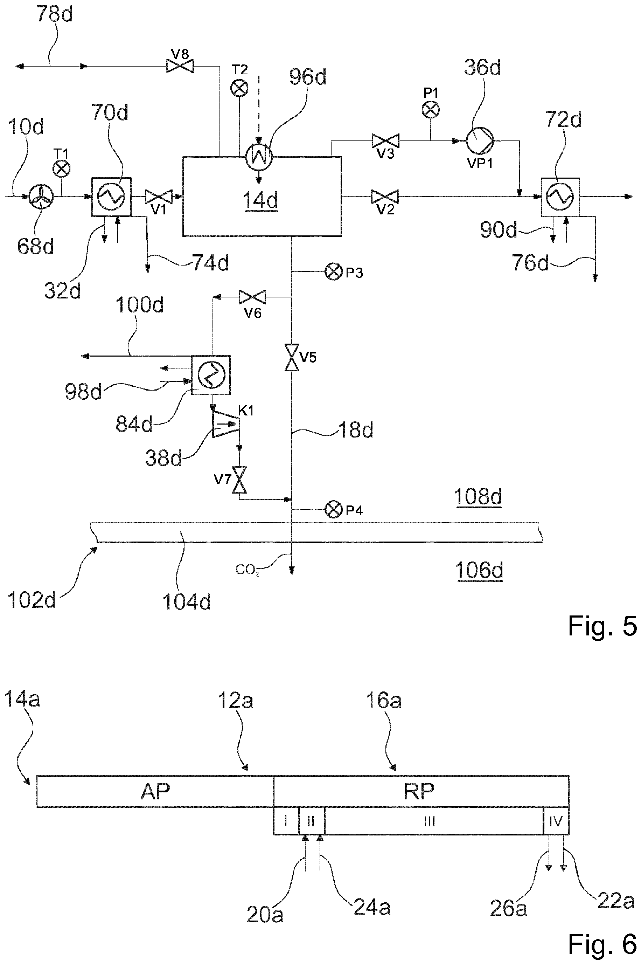

Figur 1 zeigt einen Ausschnitt einer Lebenserhaltungsvorrichtung zur Durchführung eines erfindungsgemäßen Verfahrens. Die Vorrichtung umfasst zu einer Abtrennung von Kohlendioxid aus einem Gasgemisch 10a, und zwar aus Atemluft in einem geschlossenen Habitat 108a eines U-Boots 102a, dessen Außenwand 104a angedeutet ist, mehrere Absorptionseinheiten 14a, die miteinander verschaltet sind (Figuren 1, 2 und 6). Die einzelnen Absorptionseinheiten 14a durchlaufen zeitversetzt in einem ständigen Wechsel einen ersten Verfahrensschritt 12a, und zwar eine Absorptionsphase (AP), und im Anschluss daran einen zweiten Verfahrensschritt 16a, und zwar eine Regenerationsphase (RP) (Figur 6). Zur vereinfachten Darstellung ist nur eine der Absorptionseinheit 14a dargestellt, wobei die anderen, nicht näher dargestellten Absorptionseinheiten baugleich zu der dargestellten Absorptionseinheit 14a ausgeführt sind. Die Absorptionseinheit 14a umfasst einen Druckbehälter 44a, und zwar ein zylindrisches Absorptionsrohr, in welchem Absorbermaterial der Absorptionseinheit 14a angeordnet ist. Es wird als Absorptionseinheit 14a der Druckbehälter 44a verwendet. In dem Druckbehälter 44a wird ein Festkörperabsorber 28a verwendet, d.h. das Absorbermaterial ist von einem festen Material gebildet, und zwar von einem Harz, das in Form einer Schüttung vorliegt. Bei dem Harz handelt es sich um ein Festamin-Harz.

Die Absorptionseinheit 14a umfasst einen Volumenkompensator 34a, der dazu vorgesehen ist und dazu eingesetzt wird, eine Kompaktierung des Absorptionsmaterials der Absorptionseinheit 14a sicher zu stellen. Der Volumenkompensator 34a weist einen im Absorptionsrohr angeordneten Faltenbalg 46a auf. Der Faltenbalg 46a ist mit seinem ersten Ende 48a fest mit dem Absorptionsrohr verbunden und ist mit seinem zweiten Ende 50a mit einem innerhalb des Absorptionsrohrs beweglich angeordneten Lochblech 52a des Volumenkompensators 34a verbunden. Der Faltenbalg 46a ist aus Polytetrafluorethylen hergestellt. Grundsätzlich sind jedoch auch andere, dem Fachmann als sinnvoll erscheinende Materialien denkbar. Ferner umfasst der Volumenkompensator 34a mechanische Federelemente 42a, die das Lochblech 52a in Richtung des Absorbermaterials belasten. Dabei stützen sich die Federelemente 42a mit ihren ersten Enden 58a an einem Deckel 60a der Absorptionseinheit 14a ab, mittels dessen das Absorptionsrohr an seinem ersten Ende verschlossen ist. Zwischen dem Deckel 60a und dem Absorptionsrohr ist eine nicht näher dargestellte Dichtung, und zwar eine Doppeldichtung angeordnet. An seinem zweiten Ende ist das Absorptionsrohr mit einem Boden 62a verschlossen. Der Deckel 60a und der Boden 62a sind jeweils mit einem am Absorptionsrohr befestigten Außenflansch 64a, 66a verschraubt. Die Federelemente 42a werden von metallischen Schraubendruckfedern gebildet. In eine von dem beweglich angeordneten Lochblech 52a abgewandte Richtung ist das Absorbermaterial an einem im Absorptionsrohr befestigten zweiten Lochblech 56a abgestützt. Die Lochbleche 52a, 56a sind jeweils mit einem integrierten Metallgewebe verstärkt. Mittels des Volumenkompensators 34a kann eine Volumenveränderung 54a bzw. Quellung des Absorbermaterials im Absorptionsrohr gewährleistet werden und dennoch kann eine vorteilhafte Kompaktheit des Absorbermaterials bzw. der Schüttung sicher gestellt werden. Mittels des Faltenbalgs 46a kann vorteilhaft eine Reibung zwischen dem Lochblech 52a und einer Innenseite des Absorptionsrohrs vermieden werden.

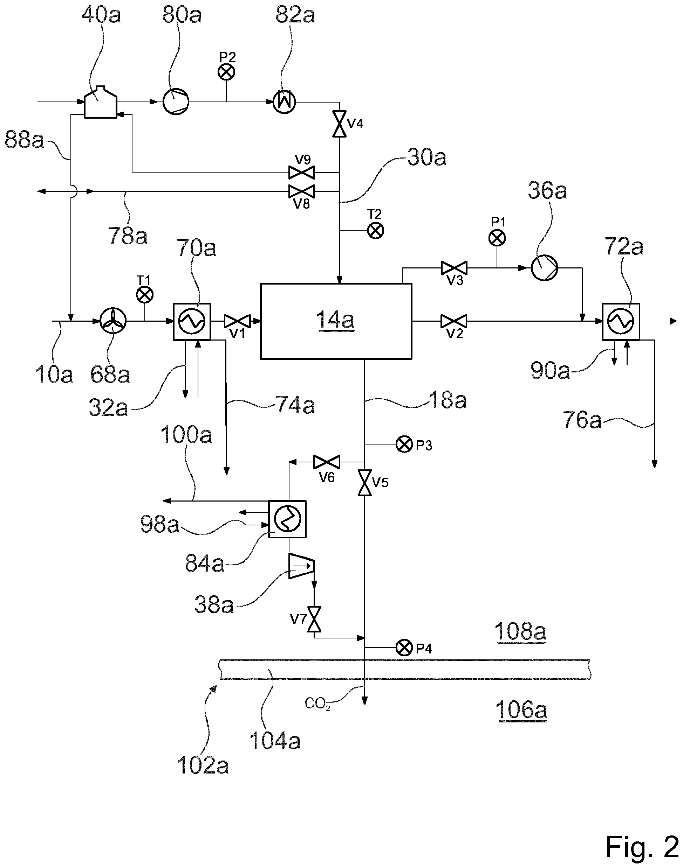

Bei dem ersten Verfahrensschritt 12a, d.h. bei der Absorptionsphase, wird das Gasgemisch 10a, d.h. die Atemluft, mittels eines Gebläses 68a bei einem ersten Druck und einer ersten Temperatur der Absorptionseinheit 14a zugeführt und durch das Absorptionsrohr und durch das Absorptionsmaterial, d.h. die Schüttung, geleitet (Figuren 1 und 2). Der erste Druck entspricht dabei einem Umgebungsdruck der Absorptionseinheit 14a. Ferner entspricht die erste Temperatur einer Umgebungstemperatur der Absorptionseinheit 14a.

Zur Steuerung der Vorrichtung weist dieselbe mehrere Ventile V1 - V9 auf, wobei die Ventile V1 und V2 zur Zuführung der Atemluft mittels des Gebläses 68a geöffnet sind. Die restlichen Ventile V3 - V9 sind geschlossen. In der Absorptionsphase wird CO₂ an dem Absorptionsmaterial gebunden und das nasse Absorptionsmaterial nach einer zeitlich zuvor durchgeführten Regenerationsphase (RP) getrocknet und abgekühlt. Die Vorrichtung weist einen der Absorptionseinheit 14a vorgeschalteten kondensierenden Wärmetauscher 70a auf. Am Ende der Absorptionsphase (AP) kann dann kalte Luft, bereitgestellt durch den kondensierenden Wärmetauscher 70a, durch das Absorptionsmaterial bzw. die Schüttung geleitet werden, um eine möglichst hohe CO₂-Beladung des Absorptionsmaterials am Ende der Absorption bei niedriger Temperatur zu erzielen. Die Temperatur während der Absorptionsphase (AP) wird mittels eines Temperatursensors T1 geregelt und überwacht. Luft am Ausgang der Absorptionseinheit 14a wird mittels eines weiteren, der Absorptionseinheit 14a nachgeschalteten kondensierenden Wärmetauschers 72a gekühlt und getrocknet. Die Vorrichtung weist noch einen weiteren kondensierenden Wärmetauscher 84a auf, dessen Funktion später noch beschrieben wird. Die kondensierenden Wärmetauscher 70a, 72a, 84a der Vorrichtung sind an Kühlkreisläufe des U-Boots 102a angeschlossen und werden mit Kühlwasser 32a, 90a, 98a versorgt. Kondenswasser 74a, 76a, 100a wird aus den kondensierenden Wärmetauschern 70a, 72a, 84a abgeführt. Vorzugsweise sind alle kondensierenden Wärmetauscher 70a, 72a, 84a der Vorrichtung an Kühlkreisläufe des U-Boots 102a angeschlossen. Der dem Wärmetauscher 70a zugeordnete Kühlkreislauf kann dabei auch in einem Bypass betrieben werden.

Die sich an die Absorptionsphase (AP) anschließenden Regenerationsphase (RP) des Absorptionsmaterials umfasst folgende Prozessschritte (Figur 6):
I. Schließen der Ventile V1 und V2 und öffnen des Ventils V3:
   Zunächst wird mittels einer Vakuumpumpe 36a, die sich in einem Hohlraumvolumen der Schüttung befindliche Luft abgesaugt und in das Habitat 108a des U-Boots 102a zurückgeführt. Eine dadurch realisierte Luftrückgewinnung wird dabei durch eine Messung eines Absolutdrucks in dem Absorptionsrohr mittels eines Absolutdrucksensors P1 zeitlich geregelt.
II. Dampfeinspeisung und CO₂-Einspeisung:
   Im Anschluss wird ein Gemisch 78a aus Dampf und CO₂ bei Temperaturen max. 110°C in die evakuierte und kalte Absorptionseinhet 14a eingeleitet. Das Gemisch 78a wird aus einer zweiten, nicht näher dargestellten Absorptionseinheit der Absorptionseinheit 14a zugeführt. Hierzu wird das Ventil V3 zuerst geschlossen und dann das Ventil V8 geöffnet, über das das Gemisch 78a der Absorptionseinheit 14a zugeführt wird. Die zweite, nicht näher dargestellte Absorptionseinheit hat dabei zuvor eine Regenerationsphase beendet, sodass in dieser nicht näher dargestellten Absorptionseinheit ein hoher Druck, vorzugsweise größer als 5 bar_{abs.}, und eine hohe Temperatur, vorzugsweise größer als 90°C, vorliegt, wodurch eine Druckwechselintegration und partielle Wärmeintegration erreicht wird, sodass Wärmeenergie 20a und Druckenergie 24a von der nicht näher dargestellten Adsorptionseinheit zur Absorptionseinheit 14a übertragen wird (Figuren 2 und 6). Das CO₂ wird von der nicht näher dargestellten Absorptionseinheit zu der Absorptionseinheit 14a zu einer Aufkonzentration rückgeführt. Eine Dampfeinlasstemperatur wird mittels eines Temperatursensors T2 überwacht. Durch eine CO₂-Absorption am kalten Absorptionsmaterial in der Absorptionseinheit 14a wird zusätzliche Absorptionswärme frei, die zur zusätzlichen Erwärmung der Absorptionseinheit 14a genutzt wird.
III. Heißdampfeinspeisung:
   Im Anschluss wird Heißdampf 30a, d.h. überhitzter Dampf, in die Absorptionseinheit 14a, und zwar in einen Innenraum des Druckbehälters 44a, in dem sich auch das Absorptionsmaterial befindet, mittels einer Hochdruckpumpe 80a, die Wasser von einem Flüssigkeitstank 40a bezieht, und einem Hochdruckverdampfer 82a eingespeist und damit die Absorptionseinheit 14a und das darin befindliche Absorptionsmaterial weiter erwärmt und der Druck weiter erhöht. Es ist dabei das Ventil V4 offen und die restlichen Ventile V1 - V3 und V5 - V9 sind geschlossen. Eine Dampfeinlasstemperatur wird dabei über einen Temperatursensor T2 in Verbindung mit einem Drucksensor P2, mit der Hochdruckpumpe 80a und dem Hochdruckverdampfer 82a geregelt. Durch eine eingeleitete Dampffront und ein weiteres Aufheizen des Absorptionsmaterials desorbiert CO₂ und es stellt sich zunächst ein CO₂/Wasserdampfgasdruck in der Absorptionseinheit 14a ein, und zwar in dem Absorptionsrohr von zunächst ca. 1,5 bar_{abs.}.
   Bei einer Dampfeinlasstemperatur von max. 110°C wid ab einem Druck von größer als 1,5 bar_{abs.} im folgenden kein Dampf mehr, sondern nur noch heißes Wasser in das Absorptionsrohr eingeleitet. Durch das eingeleitete heiße Wasser wird jedoch weiterhin das Absorptionsrohr beheizt, das freie Gasvolumen im Absorptionsrohr verkleinert und das CO₂ aus dem Absorptionsmaterial ausgetrieben/verdrängt. Das CO₂ kann sich dabei bei den hohen Temperaturen, insbesondere größer als 90°C, nicht nennenswert im Wasser lösen. Durch das Wasser wird zusätzlich das Absorptionsmaterial, und zwar das Harz, verstärkt quellen, was zu einer Volumenausdehnung des Absorptionsmaterial bzw. der Schüttung führt, wodurch das freie Gasvolumen zusätzlich reduziert wird und der Druck im Absorptionsrohr weiter ansteigt. Des Weiteren nimmt mit zunehmender Wasseraufnahme des Harzes die CO₂-Bindefähigkeit des Harzes ab. Der Druckanstieg während dieser Phase kann beeinflusst werden, indem ein Massenstrom des heißen Wassers geregelt wird. Ab einem bestimmten Druck in der Absorptionseinheit 14a wird, abhängig von einer Tauchtiefe des U-Boots 102a, entweder das nasse CO₂ ohne Kompressor und damit ohne Nachverdichtung direkt über Bord, d.h. durch die Außenwand 104a des U-Boots 102a gepresst (Ventil V5 wird geöffnet) oder das nasse und bereits teilweise komprimierte CO₂ (Ventil 6 offen, Ventil 5 geschlossen) wird zunächst mit einem kondensierenden Wärmetauscher 84a bei niedriger Temperatur, insbesondere kleiner als 20°C, und hohem Druck, insbesondere größer als 5 bar_{abs.}, effektiv getrocknet, um anschließend mit einem kompakten Kompressor 38a nachverdichtet und über die offenen Ventile V6 und V7 abgeführt zu werden (Ventil V5 dabei geschlossen). Ein CO₂-Gasfluss wird dabei mittels Drucksensoren P3 sowie P4 und über die Ventilstellung der Ventile V5 - V7 geregelt. In dem zweiten Verfahrensschritt 16a, und zwar am Ende der Regenerationsphase (RP), wird damit ein Gasgemisch 18a bei einem zweiten Druck aus der Absorptionseinheit 14a abgeführt, der höher ist als der erste Druck, bei dem das Gasgemisch 10a in dem ersten Verfahrensschritt 12a, und zwar in der Absorptionsphase (AP), zugeführt wurde. Ferner wird das Gasgemisch 18a im zweiten Verfahrensschritt 16a bei einer zweiten Temperatur abgeführt, die höher ist als die erste Temperatur, bei der das Gasgemisch 10a in dem ersten Verfahrensschritt 12a der Absorptionseinheit 14a zugeführt wurde. Grundsätzlich ist auch denkbar, dass auf den Kompressor 38a vollständig verzichtet werden kann.
IV. Druckwechsel- und partielle Wärmeintegration:
   Am Ende der Regenerationsphase (RP) wird eine sich noch im Absorptionsrohr befindliche heiße und unter Druck stehende Gasphase weitest möglich an eine weitere, nicht näher dargestellte Absorptionseinheit über das Ventil V8 abgegeben (Druckwechsel- und partielle Wärmeintegration), wobei die nicht näher dargestellte Absorptionseinheit sich gerade zu Beginn einer entsprechenden Regenerationsphase befindet und kalt und evakuiert ist. Es wird Wärmeenergie 22a und Druckenergie 26a aus der Absorptionseinheit 14a an die weitere, nicht näher dargestellte Absorptionseinheit übertragen (Figuren 2 und 6).
   Eine sich unter Restdruck befindende Gasphase im Absorptionsrohr kann dann im Flüssigkeitstank 40a abgelassen bzw. durch den Flüssigkeitstank 40a (Ventil V9 offen und Ventil V8 geschlossen) geleitet werden, wobei das Wasser erwärmt wird und sich CO₂ im Wasser löst. CO₂-Restgas wird dann über eine Leitung 88a in einen Lufteinlass vor das Gebläse 68a eingeleitet. Vorgewärmtes und mit CO₂ gesättigtes Wasser aus dem Flüssigkeitstank 40a wird dann als Feedwasser für weitere Regenerationen verwendet.

Es ist ebenfalls möglich, während einer Anfahrphase der Vorrichtung kein CO₂ sofort über die Ventile V5 und V6 während der Regenerationsphase aus der Absorptionseinheit 14a abzuführen, sondern das gesamte desorbierte Gas in eine weitere, nicht näher dargestellte Absorptionseinheit einzuleiten. Durch eine entsprechende CO₂-Rückführung über das Ventil V8 kann dann im Folgenden in der nicht näher dargestellten Absorptionseinheit ein höherer Druck während der Regeneration aufgebaut werden, und zwar insbesondere aufgrund dessen, dass eine größere Menge CO₂ während der Regenerationsphase desorbieren kann. Diese CO₂-Rückführung kann in der Vorrichtung mehrfach, insbesondere während der Anfahrphase wiederholt werden, womit eine stufenweise CO₂-Aufkonzentrierung in den Absorptionseinheiten bzw. in dessen Absorptionsrohren erzielt wird. Am Ende der Anfahrphase wird dann ein Teilgasstrom des sich in der Vorrichtung befindlichen CO₂ bei max. erzielbarem Druck abgeführt, ein hoher Druck während der Regenerationen im stationären Betrieb der Vorrichtung jedoch aufrechterhalten. Dabei ist insbesondere auch eine Druckobergrenze zu beachten, ab der sich das CO₂ verflüssigt.

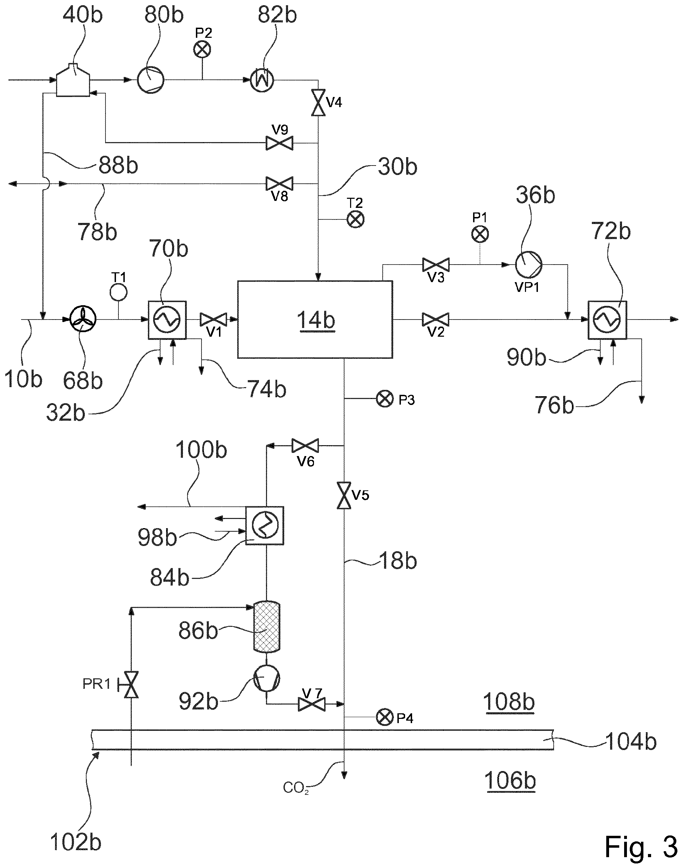

In den Figuren 3 bis 5 und 7 sind vier weitere Ausführungsbeispiele der Erfindung gezeigt. Die nachfolgenden Beschreibungen beschränken sich im Wesentlichen auf Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1, 2 und 6, verwiesen werden kann. Zur Unterscheidung der Ausführungsbeispiele ist der Buchstabe a in den Bezugszeichen des Ausführungsbeispiels der Figuren 1, 2 und 6 in den Figuren 3 bis 5 und 7 durch die Buchstaben b - e ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1, 2 und 6, verwiesen werden.

Im Ausführungsbeispiel in Figur 3 ist vorgesehen, dass ein nasses und bereits teilweise komprimiertes CO₂ zunächst mittels eines kondensierenden Wärmetauschers 84b gekühlt und mittels eines Druckwasserwäschers 86b in einer sich anschließenden Druckwasserwäsche in Wasser bei niedriger Temperatur, vorzugsweise kleiner als 20°C, und hohem Druck, vorzugsweise größer als 8 bar_{abs.}, gelöst und das CO₂-Wasser aus dem U-Boot 102a mittels einer Hochdruckpumpe 92b abgegeben wird. Dem Druckwasserwäscher 86b wird dabei Wasser unter hohem Druck über einen Druckregler PR1 aus einer U-Bootumgebung 106a zugeführt. Ein Wasservordruck des Druckwasserwäschers 86b wird dabei mittels des Druckreglers PR1 in Verbindung mit Drucksensoren P3 sowie P4 geregelt. Ein CO₂-Gasfluss wird ebenfalls mittels der Drucksensoren P3 sowie P4 und durch Ventilschaltung von Ventilen V5 - V7 geregelt. Ein Einsatz des Druckwasserwäschers 86b ist insbesondere dann vorteilhaft möglich, wenn in verwendeten Absorptionseinheiten 14b bereits ein hoher CO₂-Gasvordruck, insbesondere größer als 10bar_{abs.}, erzielt und eine Waschkolonne mittels Druckwasserwäscher 86b entsprechend kompakt ausgeführt werden kann.

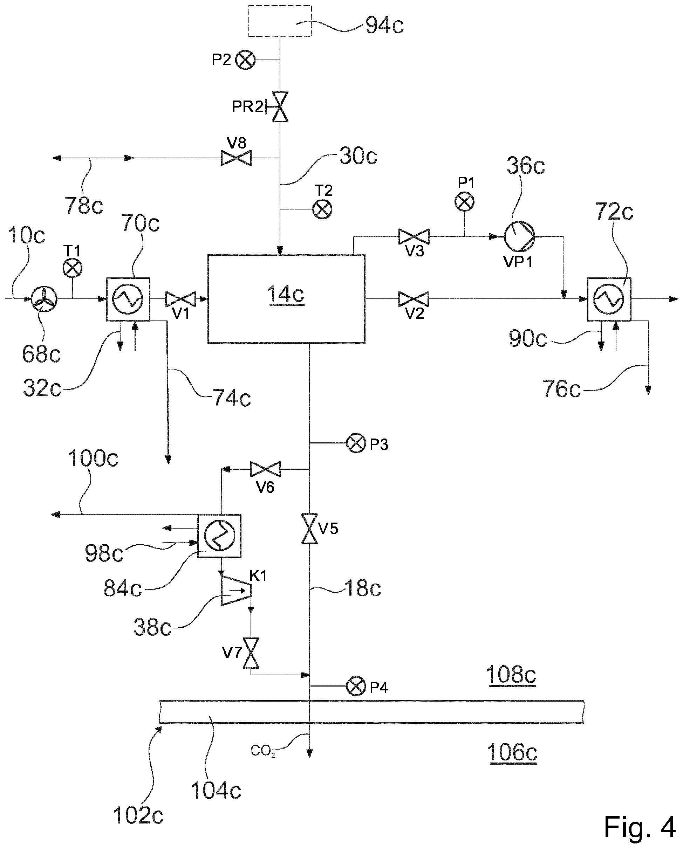

Das Ausführungsbeispiel in Figur 4 sieht eine Nutzung einer Heißdampfquelle 94c eines U-Boots 102c vor, wobei eine Dampfeinlasstemperatur und ein Dampffluss in eine Absorptionseinheit 14c mittels eines Druckreglers PR2 sowie mittels Sensoren P2 und T2 geregelt werden.

Bei dem Ausführungsbeispiel in Figur 5 wird eine Absorptionseinheit 14d mit einer Heizeinheit 96d elektrisch erwärmt. Alternativ könnte die Absorptionseinheit 14d auch mittels eines externen Wärmeträgerfluids während einer Regenerationsphase beheizt werden. Die Absorptionseinheit 14d wird dabei so weit erwärmt, dass sich ein erhöhter CO₂-Gasdruck in einem Absorptionsrohr der Absorptionseinheit 14d einstellt. Ein in der Absorptionseinheit 14d angeordnetes Absorptionsmaterial bleibt dabei in dem Absorptionsrohr der Absorptionseinheit 14d weitestgehend trocken. Ein kondensierender Wärmetauscher 84d ist dennoch vorgesehen, um einen während einer Absorptionsphase gebundenen und in der Regenerationsphase desorbierenden Wasserdampf vor einem Kompressor 38d auskondensieren zu können. Bei einem Einsatz eines Wärmeträgerfluids lässt sich durch Verwendung eines Wärmekreislaufs eine verbesserte Wärmeintegration bei einer Verschaltung von mehreren Absorptionsrohren erzielen. Mehrere Absorptionsrohre lassen sich dabei in einen Rohrbündelwärmetauscher integrieren, wobei dann das Wärmeträgerfluid mantelseitig um die Absorptionsrohre geleitet wird.

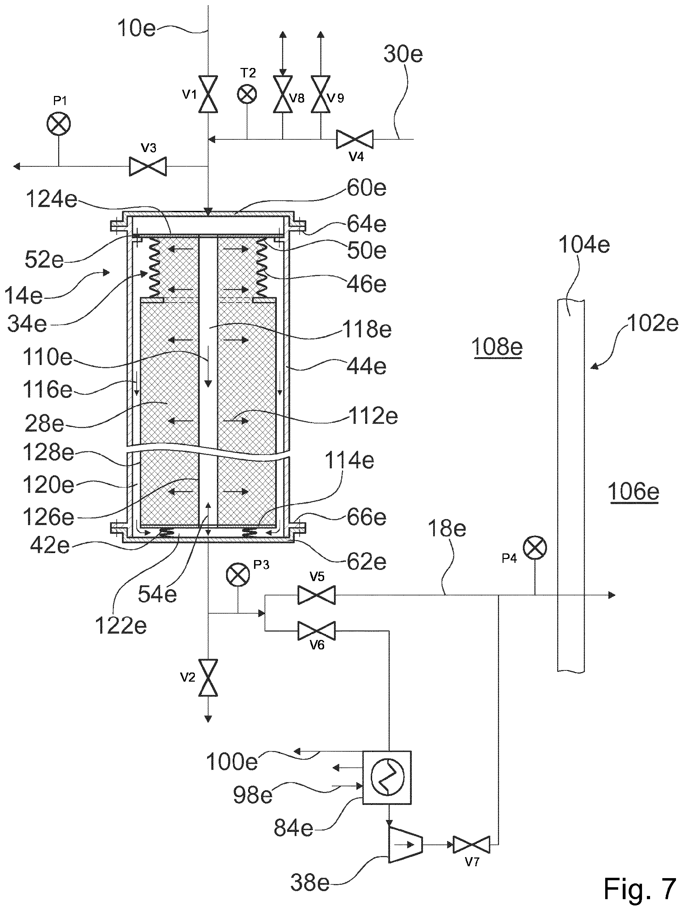

Figur 7 zeigt ein Ausführungsbeispiel bei dem ein Gasgemisch 10e in einer ersten Hauptströmungsrichtung 110e in eine Absorptionseinheit 14e eingeführt und in einer von der ersten Hauptströmungsrichtung 110e wesentlich abweichenden zweiten Hauptströmungsrichtung 112e durch ein in der Absorptionseinheit 14e angeordnetes Absorptionsmaterial geführt wird. Die Hauptströmungsrichtungen 110e, 112e stehen senkrecht aufeinander. Hierfür weist die Absorptionseinheit 14e ein Strömungsumlenkelement 114e auf, das dazu vorgesehen ist, das in der ersten Richtung 110e eingeführte Gasgemisch 10e in die von der ersten Richtung 110e wesentlich abweichende zweite Richtung 112e durch das in der Absorptionseinheit 14e angeordnete Absorptionsmaterial umzulenken. Die Absorptionseinheit 14e weist einen Ringkorb 116e mit einem Axialkanal 118e auf. Der Ringkorb 116e ist in einem zylindrischen Druckbehälter 44e der Absorptionseinheit 14e angeordnet. Der Ringkorb 116e, indem das Absorptionsmaterial angeordnet ist, ist an einem der ersten Hauptströmungsrichtung 110e entgegen gewandten Bereich teilweise von einem Faltenbalg 46e gebildet, der einen Teil eines Volumenkompensators 34e der Absorptionseinheit 14e bildet. Der Ringkorb 116e ist am freien Ende 50e des Faltenbalgs 46e über eine Ringplatte 124e fest mit dem Druckbehälter 44e verbunden und wird an seinem dem freien Ende des Faltenbalgs 46e gegenüberliegenden Ende mit Federelemente 42e des Volumenkompensators 34e auf Druck belastet, sodass das Absorptionsmaterial stets komprimiert ist sich jedoch im Falle einer Quellung ausdehnen kann. Der Ringkorb 116e und auch dessen Axialkanal 118e sind an dem in Hauptströmungsrichtung 110e, in welcher das Gasgemisch 10e in die Absorptionseinheit 14e eingeführt wird, weisenden Ende mit einer Platte verschlossen, die das Strömungsumlenkelement 114e bildet.

Das Gasgemisch 10e wird über den Axialkanal 118e des Ringkorbs 116e in axialer Richtung in die Absorptionseinheit 14e eingeführt und dann aufgrund des Strömungsumlenkelements 114e umgelenkt und in radialer Richtung der Absorptionseinheit 14e durch das Absorptionsmaterial geführt. Radial außerhalb des Ringkorbs 116e befindet sich zwischen dem Ringkorb 116e und dem Druckbehälter 44e ein Ringspalt 120e, durch den ein sich nach einem Absorptionsprozess resultierendes Gasgemisch axial in eine Kammer 122e am Ende der Absorptionseinheit 14e und anschließend aus der Absorptionseinheit 14e geführt wird. Der Ringkorb 116e weist hierfür eine den Axialkanal 118e begrenzende Innenwand 126e und eine den Ringkorb 116e nach außen begrenzende Außenwand 128e auf, die für das Gasgemisch 10e durchlässig ausgestaltet sind. Dabei wird die Außenwand 128e teilweise von dem ebenfalls für das Gasgemisch 10e durchlässigen Faltenbalg 46e gebildet. Durch die in dem Ausführungsbeispiel der Figur 7 gewählte Gasströmungsführung lassen sich die Druckverluste in der Absorptionseinheit 14e während der Absorptionsphase (AP) minimieren.

**Bezugszeichen**

| | | | |
|---|---|---|---|
| 10 | Gasgemisch | 68 | Gebläse |
| 12 | Verfahrensschritt | 70 | Wärmetauscher |
| 14 | Adsorptions- und/oder Absorptionseinheit | 72 | Wärmetauscher |
| 16 | Verfahrensschritt | 74 | Kondenswasser |
| 18 | Gasgemisch | 76 | Kondenswasser |
| 20 | Wärmeenergie | 78 | Gemisch |
| 22 | Wärmeenergie | 80 | Hochdruckpumpe |
| 24 | Druckenergie | 82 | Hochdruckverdampfer |
| 26 | Druckenergie | 84 | Wärmetauscher |
| 28 | Festkörperadsorber und/oder Festkörperabsorber | 86 | Druckwasserwäscher |
| 30 | Heißdampf | 88 | Leitung |
| 32 | Kühlwasser | 90 | Kühlwasser |
| 34 | Volumenkompensator | 92 | Hochdruckpumpe |
| 36 | Vakuumpumpe | 94 | Heißdampfquelle |
| 38 | Kompressors | 96 | Heizeinheit |
| 40 | Flüssigkeitstank | 98 | Kühlwasser |
| 42 | Federelement | 100 | Kondenswasser |
| 44 | Druckbehälter | 102 | U-Boot |
| 46 | Faltenbalg | 104 | Außenwand |
| 48 | Ende | 106 | U-Bootumgebung |
| 50 | Ende | 108 | Habitat |
| 52 | Lochblech | 110 | Hauptströmungsrichtung |
| 54 | Volumenveränderung | 112 | Hauptströmungsrichtung |
| 56 | Lochblech | 114 | Strömungsumlenkelement |
| 58 | Ende | 116 | Ringkorb |
| 60 | Deckel | 118 | Axialkanal |
| 62 | Boden | 120 | Ringspalt |
| 64 | Außenflansch | 122 | Kammer |
| 66 | Außenflansch | 124 | Ringplatte |
| 126 | Innenwand | 128 | Au ßenwand |

## Patentansprüche

1. Verfahren zu einer Abtrennung von Kohlendioxid aus einem Gasgemisch (10a - 10e) welches aus Atemluft besteht, mit einer Lebenserhaltungsvorrichtung in einem U-Boot, bei dem in einem ersten Verfahrensschritt (12a) das Gasgemisch (10a - 10e) bei zumindest einem ersten Druck einer Adsorptions- und/oder Absorptionseinheit (14a - 14e) zugeführt wird, wobei als Adsorptions- und/oder Absorptionseinheit (14a - 14e) wenigstens ein Druckbehälter (44a, 44e) verwendet wird, und in einem zweiten Verfahrensschritt (16a) ein Gasgemisch (18a - 18e) bei zumindest einem zweiten, gegenüber dem ersten Druck höheren Druck aus der Adsorptions- und/oder Absorptionseinheit (14a- 14e) abgeführt wird, wobei der zweite Druck größer als 5 bar_{abs}. ist und wobei Kohlendioxid ohne Nachverdichtung und Einsatz eines Kompressors (38a, 38c, 38d, 38e) direkt aus dem U-Boot abgeführt wird, wobei zu einer Druckerhöhung innerhalb der Adsorptions- und/oder Absorptionseinheit (14a - 14e) die Adsorptions- und/oder Absorptionseinheit (14a - 14e) zu einer Begünstigung einer Desorption des Kohlendioxids erwärmt wird, wobei die Adsorptions- und/oder Absorptionseinheit (14a - 14e) mit Heißdampf (30a - 30c, 30e) erwärmt wird, wobei zu einer Druckerhöhung innerhalb der Adsorptions- und/oder Absorptionseinheit (14a - 14e) ein Fluid in die Adsorptions- und/oder Absorptionseinheit (14a - 14e) eingeführt wird, wobei im ersten Verfahrensschritt (12a) das Gasgemisch (10a - 10e) bei zumindest einer ersten Temperatur der Adsorptions- und/oder Absorptionseinheit (14a - 14e) zugeführt wird und in dem zweiten Verfahrensschritt (16a) das abzuführende Gasgemisch (18a - 18e) bei zumindest einer zweiten, gegenüber der ersten Temperatur höheren Temperatur aus der Adsorptions- und/oder Absorptionseinheit (14a - 14e) abgeführt wird.

2. Verfahren nach Anspruch 1, **dadurch gekennzeichnet, dass** das Gasgemisch (10a - 10e) im ersten Verfahrensschritt (12a) zumindest im Wesentlichen unter einem Umgebungsdruck der Adsorptions- und/oder Absorptionseinheit (14a - 14e) zugeführt wird.

3. Verfahren nach einem der vorhergehenden Ansprüche, **dadurch gekennzeichnet, dass** zumindest eine Adsorptions- und/oder Absorptionseinheit (14d) elektrisch erwärmt wird.

4. Verfahren nach einem der vorhergehenden Ansprüche, **dadurch gekennzeichnet, dass** zur Druckerhöhung innerhalb der Adsorptions- und/oder Absorptionseinheit (14a, 14b, 14c, 14e) Heißdampf (30a - 30c, 30e) eingeführt wird.

5. Verfahren nach einem der vorhergehenden Ansprüche, **dadurch gekennzeichnet, dass** für eine Aufkonzentration in der Adsorptions- und/oder Absorptionseinheit (14a - 14e) ein Gas zur Adsorptions- und/oder Absorptionseinheit (14a - 14e) rückgeführt wird.

6. Verfahren nach einem der vorhergehenden Ansprüche, **dadurch gekennzeichnet, dass** in wenigstens einer Adsorptions- und/oder Absorptionseinheit (14a - 14e) wenigstens ein Volumenkompensator (34a, 34e) eingesetzt wird, der dazu vorgesehen ist, eine Kompaktierung eines Adsorptions- und/oder Absorptionsmaterials der Adsorptions- und/oder Absorptionseinheit (14a - 14e) sicher zu stellen.

7. Verfahren nach einem der vorhergehenden Ansprüche, **dadurch gekennzeichnet, dass** das Gasgemisch (10e) in einer ersten Richtung (110e) in die Adsorptions- und/oder Absorptionseinheit (14e) eingeführt und in einer von der ersten Richtung (110e) wesentlich abweichenden zweiten Richtung (112e) durch ein in der Adsorptions- und/oder Absorptionseinheit (14e) angeordnetes Adsorptions- und/oder Absorptionsmaterial geführt wird.

8. Verfahren nach einem der vorhergehenden Ansprüche, **dadurch gekennzeichnet, dass** Wärmeenergie (20a, 22a) von einer Adsorptions- und/oder Absorptionseinheit (14a - 14e) zu zumindest einer weiteren Adsorptions- und/oder Absorptionseinheit übertragen wird.

9. Verfahren nach einem der vorhergehenden Ansprüche, **dadurch gekennzeichnet, dass** Druckenergie (24a, 26a) von einer Adsorptions- und/oder Absorptionseinheit (14a - 14e) zu zumindest einer weiteren Adsorptions- und/oder Absorptionseinheit übertragen wird.

10. Verfahren nach einem der vorhergehenden Ansprüche, **dadurch gekennzeichnet, dass** zumindest ein Festkörperadsorber und/oder ein Festkörperabsorber (28a, 28e) genutzt wird.

11. Verfahren nach einem der vorhergehenden Ansprüche, **dadurch gekennzeichnet, dass** zumindest ein Amin verwendet wird.

12. Verfahren nach einem der vorhergehenden Ansprüche, **dadurch gekennzeichnet, dass** eine Luftrückgewinnung aus zumindest einer Adsorptions- und/oder Absorptionseinheit (14a - 14e) mittels wenigstens einer Vakuumpumpe (36a - 36d) durchgeführt wird.

13. Verfahren nach einem der vorhergehenden Ansprüche, **dadurch gekennzeichnet, dass** vorverdichtetes Kohlendioxid nach einem Abführen aus zumindest einer Adsorptions- und/oder Absorptionseinheit (14a - 14e) getrocknet und anschließend nachverdichtet wird.

14. Verfahren nach einem der vorhergehenden Ansprüche, **dadurch gekennzeichnet, dass** Kohlendioxid mittels wenigstens eines Druckwasserwäschers (86b) in einer Flüssigkeit gelöst wird.

15. Verfahren nach einem der vorhergehenden Ansprüche, **dadurch gekennzeichnet, dass** ein Restgasdruck in zumindest einer Adsorptions- und/oder Absorptionseinheit (14a, 14b, 14e) in wenigstens einem Verfahrensschritt (16a) in einen Flüssigkeitstank (40a, 40b) abgelassen wird.

## Claims

1. Method for separating off carbon dioxide from a gas mixture (10a-1 0e) that consists of breathing air, with a life-sustaining device in a submarine,
in which
- in a first method step (12a) the gas mixture (10a-10e) is fed to an adsorption and/or absorption unit (14a-14e) under at least one first pressure, wherein at least one pressure container (44a, 44e) is used as an adsorption and/or absorption unit (14a-14e), and
in a second method step (16a) a gas mixture (18a-18e) is conveyed out of the adsorption and/or absorption unit (14a-14e) under at least one second pressure that is higher than the first pressure, wherein the second pressure is greater than 5 bar_{abs}. and wherein carbon dioxide is conveyed directly out of the submarine without subsequent densification and without using a compressor (38a, 38c, 38d, 38e),
wherein for a pressure increase inside the adsorption and/or absorption unit (14a-14e) the adsorption and/or absorption unit (14a-14e) is heated to favour a desorption of the carbon dioxide,
wherein the adsorption and/or absorption unit (14a-14e) is heated by means of hot vapour (30a-30c, 30e),
wherein for a pressure increase inside the adsorption and/or absorption unit (14a-14e) a fluid is introduced into the adsorption and/or absorption unit (14a-14e),
wherein
- in the first method step (12a) the gas mixture (10a-10e) is fed to the adsorption and/or absorption unit (14a-14e) under at least one first temperature and
- in the second method step (16a) the gas mixture (18a-18e) that is to conveyed off is conveyed out of the adsorption and/or absorption unit (14a-14e) under at least one second temperature that is higher than the first temperature.

2. Method according to claim 1,
**characterised in that** in the first method step (12a) the gas mixture (10a-10e) is fed to the adsorption and/or absorption unit (14a-14e) at least substantially under ambient pressure.

3. Method according to one of the preceding claims,
**characterised in that** at least one adsorption and/or absorption unit (14d) is heated electrically.

4. Method according to one of the preceding claims,
**characterised in that** for a pressure increase inside the adsorption and/or absorption unit (14a, 14b, 14c, 14e) hot vapor (30a-30c, 30e) is introduced.

5. Method according to one of the preceding claims,
**characterised in that** for the purpose of increasing a concentration in the adsorption and/or absorption unit (14a-14e) a gas is refed to the adsorption and/or absorption unit (14a-14e).

6. Method according to one of the preceding claims,
**characterised in that** in at least one adsorption and/or absorption unit (14a-14e) at least one volume compensator (34a, 34e) is applied, which is configured to ensure a compaction of an adsorption and/or absorption material of the adsorption and/or absorption unit (14a-14e).

7. Method according to one of the preceding claims,
**characterised in that** the gas mixture (10e) is introduced into the adsorption and/or absorption unit (14e) in a first direction (110e) and is conveyed through an adsorption and/or absorption material arranged in the adsorption and/or absorption unit (14a-14e) in a second direction (112e), which substantially deviates from the first direction (110e).

8. Method according to one of the preceding claims,
**characterised in that** thermal energy (20a, 22a) is transferred from an adsorption and/or absorption unit (14a-14e) to at least one further adsorption and/or absorption unit.

9. Method according to one of the preceding claims,
**characterised in that** pressure energy (24a, 26a) is transferred from an adsorption and/or absorption unit (14a-14e) to at least one further adsorption and/or absorption unit.

10. Method according to one of the preceding claims,
**characterised in that** at least one solid-matter adsorber and/or solid-matter absorber (28a, 28e) is used.

11. Method according to one of the preceding claims,
**characterised in that** at least an amine is used.

12. Method according to one of the preceding claims,
**characterised in that** a recovery of air from at least one adsorption and/or absorption unit (14a-14e) is executed by means of at least one vacuum pump (36a-36d).

13. Method according to one of the preceding claims,
**characterised in that** pre-densified carbon dioxide, after being conveyed out of at least one adsorption and/or absorption unit (14a-14e), is dried and subsequently densified.

14. Method according to one of the preceding claims,
**characterised in that** carbon dioxide is dissolved in a liquid by means of at least one pressure-water washer (86b).

15. Method according to one of the preceding claims,
**characterised in that** in at least one method step (16a) a residual gas pressure in at least one adsorption and/or absorption unit (14a, 14b, 14e) is discharged into a liquid tank (40a, 40b).

## Revendications

1. Procédé pour une séparation de dioxyde de carbone d'une mixture gazeuse (10a-e) consistant d'air respiratoire, avec un dispositif de maintien de vie dans un sous-marin, dans lequel
- dans une première étape de procédé (12a) la mixture gazeuse (10a-e) est alimentée à une unité d'adsorption et/ou absorption (14a-14e) sous au moins une première pression, où au moins un récipient à pression (44a, 44e) est utilisé comme l'unité d'adsorption et/ou absorption (14a-14e), et
- dans une deuxième étape de procédé (16a) une mixture gazeuse (18a-18e) est enlevée de l'unité d'adsorption et/ou absorption (14a-14e) sous au moins une deuxième pression qui est supérieure à la première pression, la deuxième pression étant supérieure à 5 bar_{abs.} et du dioxyde de carbone étant enlevé du sous-marin directement sans post-compression et sans utilisation d'un compresseur (38a, 38c, 38d, 38e),
où pour une augmentation de la pression dans l'unité d'adsorption et/ou absorption (14a-14e), l'unité d'adsorption et/ou absorption (14a-14e) est chauffée de façon à favoriser une désorption du dioxyde de carbone,
où l'unité d'adsorption et/ou absorption (14a-14e) est chauffée moyennant une vapeur chaude (30a-30c, 30e),
où pour une augmentation de la pression dans l'unité d'adsorption et/ou absorption (14a-14e) un fluide est introduit dans l'unité d'adsorption et/ou absorption (14a-14e), où
- dans la première étape de procédé (12a) la mixture gazeuse (10a-e) est alimentée à l'unité d'adsorption et/ou absorption (14a-14e) sous au moins une première température et
- dans la deuxième étape de procédé (16a) la mixture gazeuse à enlever (18a-18e) est enlevée de l'unité d'adsorption et/ou absorption (14a-14e) sous au moins une deuxième température qui est supérieure à la première température.

2. Procédé selon la revendication 1,
**caractérisé en ce que** dans la première étape de procédé (12a) la mixture gazeuse (10a-10e) est alimentée à l'unité d'adsorption et/ou absorption (14a-14e) au moins sensiblement sous une pression ambiante.

3. Procédé selon l'une quelconque des revendications précédentes,
**caractérisé en ce qu'**au moins une unité d'adsorption et/ou absorption (14d) est chauffée électriquement.

4. Procédé selon l'une quelconque des revendications précédentes,
**caractérisé en ce que** pour une augmentation de la pression de la vapeur chaude (30a-30c, 30e) est introduite dans l'unité d'adsorption et/ou absorption (14a, 14b, 14c, 14e).

5. Procédé selon l'une quelconque des revendications précédentes,
**caractérisé en ce que** pour une augmentation de concentration dans l'unité d'adsorption et/ou absorption (14a-14e) un gaz est réalimenté à l'unité d'adsorption et/ou absorption (14a-14e).

6. Procédé selon l'une quelconque des revendications précédentes,
**caractérisé en ce que** dans au moins une unité d'adsorption et/ou absorption (14a-14e) au moins un compensateur de volume (34a, 34e) est employé, qui est prévu à assurer une compactification d'un matériau d'adsorption et/ou absorption de l'unité d'adsorption et/ou absorption (14a-14e).

7. Procédé selon l'une quelconque des revendications précédentes,
**caractérisé en ce que** la mixture gazeuse (10e) est introduite dans l'unité d'adsorption et/ou absorption (14e) dans une première direction (110e) et est conduite à travers un matériau d'adsorption et/ou absorption disposé dans l'unité d'adsorption et/ou absorption (14e) dans une deuxième direction (112e) qui est sensiblement différent de la première direction (110e).

8. Procédé selon l'une quelconque des revendications précédentes,
**caractérisé en ce que** de l'énergie thermique (20a, 22a) est transférée d'une unité d'adsorption et/ou absorption (14a-14e) à au moins une autre unité d'adsorption et/ou absorption.

9. Procédé selon l'une quelconque des revendications précédentes,
**caractérisé en ce que** de l'énergie de pression (24a, 26a) est transférée d'une unité d'adsorption et/ou absorption (14a-14e) à au moins une autre unité d'adsorption et/ou absorption.

10. Procédé selon l'une quelconque des revendications précédentes,
**caractérisé en ce qu'**au moins un adsorbant en corps solide et/ou absorbant en corps solide (28a, 28e) sont/est utilisé.

11. Procédé selon l'une quelconque des revendications précédentes,
**caractérisé en ce qu'**au moins une amine est utilisée.

12. Procédé selon l'une quelconque des revendications précédentes,
**caractérisé en ce qu'**une récupération d'air d'au moins une unité d'adsorption et/ou absorption (14a-14e) est exécutée par le biais d'au moins une pompe à vide (36a-36d).

13. Procédé selon l'une quelconque des revendications précédentes,
**caractérisé en ce que** du dioxyde de carbone pré-comprimé, après enlèvement d'au moins une unité d'adsorption et/ou absorption (14a-14e), est séché et ensuite post-comprimé.

14. Procédé selon l'une quelconque des revendications précédentes,
**caractérisé en ce que** du dioxyde de carbone est dissout dans un liquide moyennant au moins un nettoyeur haute-pression (86b).

15. Procédé selon l'une quelconque des revendications précédentes,
**caractérisé en ce que** dans au moins une étape de procédé (16a) une pression de gaz résiduelle dans au moins une unité d'adsorption et/ou absorption (14a, 14b, 14e) est déchargée dans un réservoir de liquide (40a, 40b).
